# EUROPÄISCHE PATENTSCHRIFT

(11) **EP 1 018 370 B1**
(45) Veröffentlichungstag und Bekanntmachung des Hinweises auf die Patenterteilung: **12.07.2006**
(21) Anmeldenummer: 00100106.4
(22) Anmeldetag: 05.01.2000
(51) Int. Cl.: B01D 29/35, B01D 29/64, B01D 29/76, E03F 5/14

(54) **Vorrichtung zur mechanischen Vorreinigung von Abwasser**
Apparatus for mechanical pre-treatment of sewage water
Appareil pour le prétraitement mécanique des eaux usées

(30) Priorität: 07.01.1999 DE 19900334
(43) Veröffentlichungstag der Anmeldung: 12.07.2000
(73) Patentinhaber: Marx, Franz, 54329 Konz-Kommlingen (DE)
(72) Erfinder: Marx, Franz, 54329 Konz-Kommlingen (DE)
(74) Vertreter: Serwe, Karl-Heinz

(56) Entgegenhaltungen:
- EP-A- 0 554 580
- DE-A- 4 239 083
- DE-A- 4 321 093
- US-A- 5 106 495

## Beschreibung

Die Erfindung betrifft eine Vorrichtung zur mechanischen Vorreinigung von Abwasser, bestehend aus einem in einen Abwasserkanal mit seinem als Siebrohr ausgebildeten unteren Abschnitt einsetzbaren Rohr mit einer unteren Eintrittsöffnung für das Abwasser, mit einer oberen Auswurföffnung für die auszusiebenden Abwasserinhaltsstoffe und mit einer im Inneren des Rohres von einem Antrieb drehbare, spiralförmige, in ihrem unteren Abschnitt innen hohle Förderschnecke zum Transport der auszusiebenden Abwasserinhaltsstoffe zurAuswurföffnung.

Derartige bekannte Vorrichtungen werden schräg in einen Abwasserkanal eingesetzt und seitlich abgedichtet, so dass das Wasser durch den Siebrohrabschnitt fließen kann und die grösseren Abwasserinhaltsstoffe in die untere Eintrittsöffnung eintreten können. Die Förderschnecke transportiert dann die gröberen Abwasserinhaltsstoffe nach oben zur Auswurföffnung. Mit zusätzlichen Burstenleisten werden die ankommenden Kleinfeststoffe durch die Durchtrittsöffnungen des Siebröhres durchgedrückt. Zusätzlich angebrachte Frischwasserspritzdüsen spülen kontinuierlich alle Bürsten sowie die Durchtrittsöffnungen des Siebrohrabschnittes.

Diese Vorrichtung ist relativ kostenaufwendig. Sie bedarf einer ständigen Wartung. Außerdem werden hohe Anteile von Feststoffen, auch organischen Feststoffen von der Vorrichtung über die Förderschnecke zum Auswurf gebracht, die dann anschließend entsorgt werden müssen.

Vorrichtungen zum stand der technik offenbaren die DE-A-42 39 083 sowie die EP-A-0 554 580.

Demgegenüber besteht die Aufgabe der Erfindung darin, eine Vorrichtung der eingangs genannten Art derart weiterzubilden, dass bei einer wirkungsvollen mechanischen Vorreinigung im wesentlichen nur die nicht zerkleinerungsfähigen anorganischen Bestandteile entfernt werden und die organischen Bestandteile des Abwassers weitgehend zerkleinert werden.

Diese Aufgabe wird dadurch gelöst, dass die untere Stirnseite des Siebrohrabschnittes des Rohres als Bodensieb ausgebildet ist und dass die Eintrittsöffnung für das Abwasser im Abstand oberhalb des Bodensiebes im Siebrohrabschnitt des Rohres angeordnet ist.

Vorteilhaft ist der Außendurchmesser der spiralförmigen Förderschnecke etwas kleiner als der Innendurchmesser des Rohres.

Vorzugsweise ist das Rohr etwa in einem Winkel von 15° zur Vertikalen verlaufend im Abwasserkanal angeordnet.

Vorteilhaft ist der untere Endabschnitt der Förderschnecke auf dem Bodensieb gleitend angeordnet. Vorzugsweise ist der untere vordere Endabschnitt der Förderschnecke mit einem Zerkleinerungskeil versehen.

Vorzugsweise ist die Förderschnecke durch den Antrieb mit ca. 120 Umdrehungen pro Minute gedreht.

Bei einer bevorzugten Ausführungsform ist das Rohr derart in einem Verteilerschacht angeordnet, dass ein zulaufender Abwasserkanal mit der Eintrittsöffnung des Siebröhres verbunden ist und dass der ablaufende Abwasserkanal etwa in Höhe der Eintrittsöffnung angeordnet ist

Vorteilhaft ist der Verteilerschacht mit einer dachförmigen Abdeckhaube abdeckt, die auf ihrer'Außenseite Photovoltaikzellen trägt und die im Inneren eine mit den Photovoltaikzellen verbundene Batterie und eine Steuerung für den elektrischen Antrieb der Förderschnecke hat.

Vorteilhaft ist der Antrieb der Förderschnecke zeitgesteuert.

Vorzugsweise ist im zulaufenden Abwasserkanal vor der Eintrittsöffnung ein nach oben offener Notüberlauf vorgesehen.

Die Erfindung ist in den Zeichnungen beispielhaft dargestellt. Es zeigen:
- Fig. 1: eine in einem Verteilerschacht angeordnete erfindungsgemäße Vorrichtung mit Rohr und Förderschnecke im Schnitt und
- Fig. 2: den unteren Abschnitt des Rohres nach Fig. 1 in vergrösserter Darstellung.

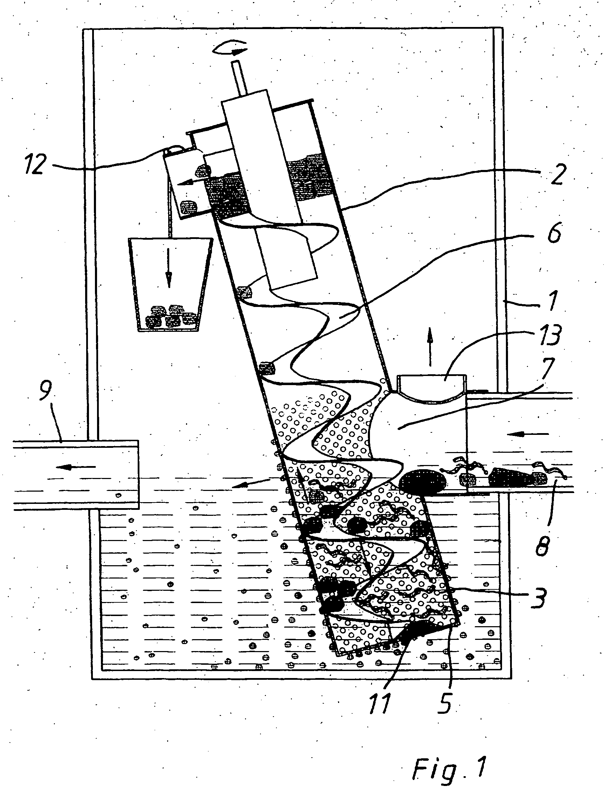

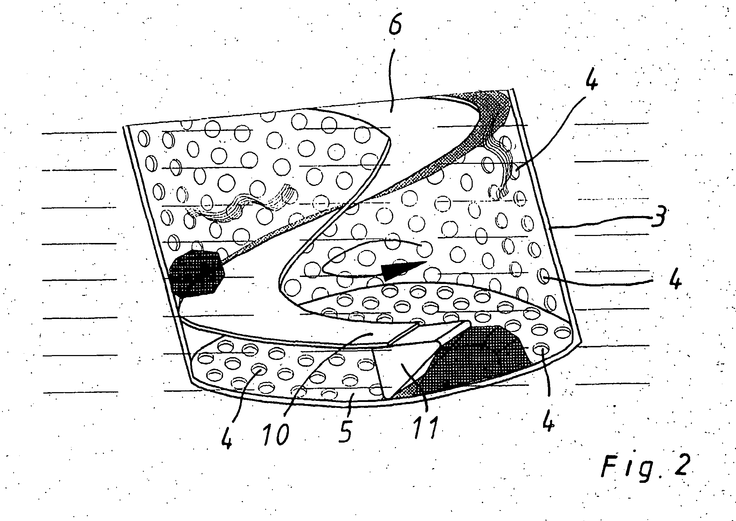

Nach. Fig. 1 ist in einem Verteilerschacht 1 ein Rohr 2 in einem Winkel von ca. 15° zur Vertikalen eingesetzt. Der untere Abschnitt des Rohres 2 ist als Siebrohr 3 mit Durchtrittsöffnungen 4 (Fig. 2) ausgebildet. Wie die Figuren 1 und 2 zeigen, ist die untere Stirnseite des Siebrohrabschnittes 3 als Bodensieb 5 gleichfalls mit Durchtrittsöffnungen 4 ausgebildet.

Wie die Figuren zeigen, ist im Inneren des Rohres 2 eine in ihrem unteren Bereich innen hohle Förderschnecke 6 angeordnet, deren Außendurchmesser etwas kleiner als der Innendurchmesser des Rohres 2 ist. Die Förderschnecke ist von einem nicht dargestellten elektrischen Antrieb antreibbar. Wie insbesondere die Fig. 1 zeigt, liegt die Förderschnecke 6 aufgrund ihres Gewichtes auf der einen Seite am Rohr 2 an und hat an der anderen Seite einen Abstand zum Rohr.

Fig. 1 zeigt weiter, dass oberhalb des Bodensiebes 5 eine Eintrittsöffnung 7 im siebartigen Abschnitt 3 des Rohres 2 angeordnet ist, in die ein zulaufender Abwasserkanal 8 mündet. Weiterhin ist mit dem Verteilerschacht ein ablaufender Abwasserkanal 9 verbunden, der etwa in der gleichen Höhe wie der zulaufende Abwasserkanal 8 angeordnet ist. Dadurch steht der untere Siebrohrabschnitt 3 stets in einem vom Abwasser gebildeten Sumpf. Oben im Rohr 2 ist eine Auswurföffnüng 12 vorgesehen. Weiterhin ist im zulaufenden Abwasserkanal 8 vor der Eintrittsöffnung 7 ein nach oben offener Notüberlauf 13 angeordnet.

Die Fig. 2 zeigt weiter, dass der vordere, untere Endabschnitt 10 der Förderschnecke 6 mit einem Zerkleinerungskeil 11 verbunden ist

Der Verteilerschacht 1 wird von einer dachförmigen, nicht dargestellten Abdeckhaube abgedeckt, die auf ihrer Außenseite Photovoltaikzellen trägt. Diese Zellen sind mit einer im Inneren der Abdeckhaube nicht dargestellten Batterie verbunden, die über eine gleichfalls nicht dargestellte Zeitsteuerung den ebenfalls nicht dargestellten elektrischen Antrieb der Förderschnecke 6 steuert.

Wie die Zeichnungen zeigen, wird das Abwasser mit den Abwasserinhaltsstoffen dem Rohr 2 oberhalb des Bodensiebes 5 und des Siebrohrabschnittes 3 zugeführt. Durch die Durchtrittsöffnungen 4 kann das Wasser den Siebrohrabschnitt 3 verlassen, während die gröberen Bestandteile im Siebrohrabschnitt 3 verbleiben. Wird nun jedoch die Förderschnecke 6 in Tätigkeit gesetzt, vorzugsweise mit einer hohen Umdrehungszahl von ca. 120 Umdrehungen pro Minute, so werden die festen Abwasserinhaltsstoffe, vorzugsweise die organischen Abwasserinhaltsstoffe durch die Zentrifugalkraft nach außen geschleudert und weitgehend zerkleinert. Die Drehung der Förderschnecke im Rohr 2 und im Siebrohrabschnitt 3 bewirkt, dass die Inhaltstoffe mechanisch zerkleinert und im Abwasser gleichmässig suspendiert werden. Diese Zerkleinerung beruht auf einer Scherenwirkung zwischen der spiralenförmigen Förderschnecke 6 und dem etwas grösser dimensionierten Rohr 2. Die Förderschnecke 6 liegt dabei aufgrund ihres Gewichtes einseitig an der einen Innenwand des Rohres 2 bzw. des Siebrohrabschnittes 3, so dass die angesammelten Grobstoffe zerschnitten und gleichzeitig durch die Durchtrittsöffnungen 4 gedrückt werden. Ebenso bewirkt der untere Endabschnitt 10 der Förderschnecke 6 mit dem Zerkleinerungskeil 11, der auf dem Bodensieb 5 gleitet, eine Zerkleinerung der Grobstoffe.

Durch die relativ steile Stellung des Rohres 2 mit dem Siebrohrabschnitt 3 und die in ihrem unteren Abschnitt innen hohle Förderschnecke 6 fallen bei Drehung der Förderschnecke nicht zerkleinerte Grobstoffe wieder zurück in den Sumpf, wo sie weiter aufgeweicht werden.

Die Erfahrung hat gezeigt, dass durch die erfindungsgemäße Vorrichtung praktisch nur die nicht verrottbaren und zerkleinerbaren anorganischen Abwasserbestandteile durch die im oberen Bereich des Rohres 2 angeordnete Auswurföffnung 12 ausgesiebt werden, so dass nur ein geringer Anfall von zu entsorgenden Abwasserinhaltstoffen auftritt.

Durch die Anordnung der nicht dargestellten Abdeckhaube wird verhindert, dass das Abwasser im Einfüllschacht einfriert. Durch den notwendigen nur kurzzeitigen Betrieb der Förderschnecke kann die Stomversorgung über eine Photovoltaikzelle erfolgen, so dass keine eigene kostspielige Stromversorgung notwendig ist.

## Patentansprüche

1. Vorrichtung zur mechanischen Vorreinigung von Abwasser, bestehend aus:einem in einen Abwasserkanal mit seinem als Siebrohr ausgebildeten unteren Abschnitt einsetzbaren Rohr mit einer unteren Eintrittsöffnung für das Abwasser, mit einer oberen Auswurföffnung für die auszusiebenden Abwasserinhaltsstoffe und mit einer im Inneren des Rohres von einem Antrieb drehbare, spiralförmige, in ihrem unteren Abschnitt innen hohle Förderschnecke zum Transport der auszusiebenden Abwasserinhaltsstoffe zur Auswurföffnung, **dadurch gekennzeichnet, dass** die untere Stirnseite des Siebrohrabschnittes (3) des Rohres (2) als Bodensieb (5) ausgebildet ist und dass die Eintrittsöffnung (7) für das Abwasser im Abstand oberhalb des Bodensiebes im Siebrohrabschnitt des Rohres angeordnet ist.

2. Vorrichtung nach Anspruch 1, **dadurch gekennzeichnet, dass** der Außendurchmesser der spiralförmigen Föderschnecke (6) kleiner als der Innendurchmesser des Rohres (2) mit dem Siebrohrabschnitt (3) ist.

3. Vorrichtung nach Anspruch 1 oder 2, **dadurch gekennzeichnet, dass** das Rohr (2) etwa in einem Winkel von 15° zur Vertikalen verlaufend im Abwasserkanal angeordnet ist

4. Vorrichtung nach einem der Ansprüche 1 bis 3, **dadurch gekennzeichnet, dass** der untere Endabschnitt (10) der Förderschnecke (6) auf dem Bodensieb (5) gleitend angeordnet ist.

5. Vorrichtung nach einem der Ansprüche 1 bis 4, **dadurch gekennzeichnet, dass** der untere vordere Endabschnitt (10) der Förderschnecke (6) mit einem Zerkleinerungskeil (11) versehen ist.

6. Vorrichtung nach einem der Ansprüche 1 bis 5, **dadurch gekennzeichnet, dass** die Förderschnecke (6) durch den Antrieb mit ca. 120 Umdrehungen pro Minute drehbar ist.

7. Vorrichtung nach einem der Ansprüche bis 7, **dadurch gekennzeichnet, dass** das Rohr (2) derart in einem Verteilerschacht (1) angeordnet ist, dass ein zulaufender Abwasserkanal (8) mit der Eintrittsöffnung (7) des Siebrohrabschnittes (3) verbunden ist und dass der ablaufende Abwasserkanal (9) etwa in der Höhe der Eintrittsöffnung (7) angeordnet ist.

8. Vorrichtung nach einem der Ansprüche 1 bis 7, **dadurch gekennzeichnet, dass** der Verteilerschacht (1) mit einer dachförmigen Abdeckhaube abgedeckt ist, die auf ihrer Außenseite Photovoltaikzellen trägt und die im Inneren eine mit den Photovoltaikzellen verbundene Batterie und eine Steuerung für den elektrischen Antrieb der Förderschnecke (6) hat.

9. Vorrichtung nach einem der Ansprüche 1 bis 8, **dadurch gekennzeichnet, dass** der Antrieb der Förderschnecke (6) zeitgesteuert ist.

10. Vorrichtung nach einem der Ansprüche 1 bis 9, **dadurch gekennzeichnet, dass** im zulaufenden Abwasserkanal (8) vor der Eintrittsöffnung (7) ein nach oben offener Notüberlauf (13) vorgesehen ist.

## Claims

1. Apparatus for mechanical pre-treatment of sewage water, consisting of a pipe which can be put in a sewer, the bottom section of which is made as a slotted pipe, with a bottom inlet opening for the sewage water, with a top ejection opening for the sewage water content to be screened out and with a spiral shaped screw conveyor inside the pipe, which can be turned by a drive, the bottom section of which is hollow on the inside, to convey the sewage water content which is to be screened out to the ejection opening, **characterised in that** the bottom face of the slotted pipe section (3) of the pipe (2) is made as a bottom screen (5) and the inlet opening (7) for the sewage water is arranged at a distance above the bottom screen in the slotted pipe section of the pipe.

2. Apparatus according to claim 1, **characterised in that** the external diameter of the spiral shaped screw conveyor (6) is smaller than the internal diameter of the pipe (2) with the slotted pipe section (3).

3. Apparatus according to claim 1 or 2, **characterised in that** the pipe (2) is arranged at an angle of about 15° to the vertical in the sewer.

4. Apparatus according to one of claims 1 to 3, **characterised in that** the bottom end section (10) of the screw conveyor (6) is arranged to slide on the bottom screen (5).

5. Apparatus according to one of claims 1 to 4, **characterised in that** the bottom front end section (10) of the screw conveyor (6) has a crushing wedge (11).

6. Apparatus according to one of claims 1 to 5, **characterised in that** the screw conveyor (6) can be turned by the drive at about 120 revolutions per minute.

7. Apparatus according to one of claims 1 to 7, **characterised in that** the pipe (2) is arranged in such a way in a distribution shaft (1) that an incoming sewer (8) is connected to the inlet opening (7) of the slotted pipe section (3) and the outgoing sewer (9) is arranged at about the height of the inlet opening (7).

8. Apparatus according to one of claims 1 to 7, **characterised in that** the distribution shaft (1) is covered with a roof shaped covering hood, which has photovoltaic cells on the outside and a battery connected to the photovoltaic cells on the inside and a control for the electric drive of the screw conveyor (6).

9. Apparatus according to one of claims 1 to 8, **characterised in that** the drive of the screw conveyor (6) is timer controlled.

10. Apparatus according to one of claims 1 to 9, **characterised in that** in the incoming sewer (8) there is an emergency overflow (13) open at the top in front of the inlet opening (7).

## Revendications

1. Dispositif de prénettoyage mécanique d'eaux usées, ledit dispositif étant constitué d'un tube qui est insérable dans un canal d'eaux usées, dont la portion inférieure est conformée en tube de filtrage, et qui comporte une ouverture d'entrée inférieure destinée aux eaux usées, une ouverture d'éjection supérieure destinée aux matières à retirer par filtrage contenues dans les eaux usées et d'une hélice transporteuse en spirale dont la portion inférieure est creuse à l'intérieur, qui est entraînable en rotation à l'intérieur du tube au moyen d'un entraînement et qui est destinée à transporter les matières à retirer par filtrage contenues dans les eaux usées vers l'ouverture d'éjection, **caractérisé en ce que** le côté frontal inférieur de la portion de tube de filtrage (3) du tube (2) est conformée en fond de filtrage (5) et **en ce que** l'ouverture d'entrée (7) destinée aux eaux usées est placée à distance au-dessus du fond de filtrage dans la portion de tube de filtrage du tube.

2. Dispositif selon la revendication 1, **caractérisé en ce que** le diamètre extérieur de l'hélice transporteur en spirale (6) est inférieur au diamètre intérieur du tube (2) comportant la portion de tube de filtrage (3).

3. Dispositif selon la revendication 1 ou 2, **caractérisé en ce que** le tube (2) est disposé dans le canal d'eaux usées en s'étendant avec un angle d'environ 15° par rapport à la verticale.

4. Dispositif selon l'une des revendications 1 à 3, **caractérisé en ce que** la portion d'extrémité inférieure (10) de l'hélice transporteuse (6) est disposée de façon à glisser sur le fond de filtrage (5).

5. Dispositif selon l'une des revendications 1 à 4, **caractérisé en ce que** la portion d'extrémité inférieure avant (10) de l'hélice transporteuse (6) est dotée d'un coin de broyage (11).

6. Dispositif selon l'une des revendications 1 à 5, **caractérisé en ce que** l'hélice transporteuse (6) peut être entraînée par l'entraînement à 120 tours par minute environ.

7. Dispositif selon l'une des revendications 1 à 7, **caractérisé en ce que** le tube est disposé dans un puits de distribution (1) de telle sorte qu'un canal d'eaux usées afférent (8) est relié à l'ouverture d'entrée (7) de la portion de tube de filtrage (3) et **en ce que** le canal d'eaux usées déférent (9) est disposé à peu près à hauteur de l'ouverture d'entrée (7).

8. Dispositif selon l'une des revendications 1 à 7, **caractérisé en ce que** le puits de distribution (1) est recouvert d'un capot de recouvrement en forme de toit qui supporte sur son côté extérieur des cellules photovoltaïques et qui possède à l'intérieur une batterie reliée aux cellules photovoltaïques et une commande destinée à l'entraînement électrique de l'hélice transporteuse (6).

9. Dispositif selon l'une des revendications 1 à 8, **caractérisé en ce que** l'entraînement de l'hélice transporteuse (6) est synchronisé.

10. Dispositif selon l'une des revendications 1 à 9, **caractérisé en ce qu'**un déversoir de secours (13) ouvert vers le haut est prévu dans le canal d'eaux usées afférent (8) en amont de l'ouverture d'entrée (7).
